# FASCICULE DE BREVET EUROPEEN

(11) **EP 1 963 987 B1**
(45) Date de publication et mention de la délivrance du brevet: **01.06.2011**
(21) Numéro de dépôt: 06841378.0
(22) Date de dépôt: 15.12.2006
(51) Int. Cl.: G06F 15/78

(54) **PROCEDE DE TELECHARGEMENT D'UN FICHIER DE CONFIGURATION DANS UN CIRCUIT PROGRAMMABLE, ET APPAREIL COMPORTANT LEDIT COMPOSANT**
VERFAHREN ZUM HERUNTERLADEN EINER KONFIGURATIONSDATEI IN EINER PROGRAMMIERBAREN SCHALTUNG UND VORRICHTUNG MIT DIESER KOMPONENTE
METHOD FOR DOWNLOADING A CONFIGURATION FILE IN A PROGRAMMABLE CIRCUIT, AND APPARATUS COMPRISING SAID COMPONENT

(30) Priorité: 20.12.2005 FR 0553965
(43) Date de publication de la demande: 03.09.2008
(73) Titulaire: Thomson Licensing, 92130 Issy-les-Moulineaux (FR)
(72) Inventeur: HORR, Olivier, F-35000 Rennes (FR); WILL, Patrick, F-35690 Acigne (FR); LAUNAY, Philippe, F-35200 Rennes (FR)
(74) Mandataire: Le Dantec, Claude
(86) Numéro de dépôt international: PCT/EP2006/069749
(87) Numéro de publication internationale: WO 2007/071617

(56) Documents cités:
- US-A1- 2003 107 399
- US-B1- 6 260 139
- US-B1- 6 326 806

## Description

L'invention concerne un procédé de téléchargement d'un fichier de configuration dans un circuit programmable et un appareil permettant un tel téléchargement.

De nos jours, on trouve de nombreux équipements grand public servant au traitement, au stockage et à la reproduction d'un grand nombre de contenus audiovisuels ou audio. Ces appareils contiennent les circuits électroniques suivants : une unité centrale, généralement un microprocesseur, une mémoire contenant un programme exécutable, une mémoire de travail, des périphériques d'entrées/sorties (Tuner, circuit de communication avec un réseau bidirectionnel, récepteur IR, ...), une mémoire de masse (disque dur), etc. L'unité centrale supervise l'ensemble des fonctions fournies par l'appareil. Elle est donc fortement utilisée. Pour diminuer sa charge de travail et ainsi augmenter sa performance pour l'exécution de certaines tâches, il est connu d'augmenter les capacités et performances des circuits périphériques. Ainsi les circuits de communication peuvent gérer la réception et l'émission d'un bloc de données, un circuit OSD (abrégé de « On Screen Display) permet d'insérer une partie d'image à l'écran, le disque dur est doté d'une interface assurant le transfert de bloc d'informations d'une taille importante.

Ces circuits sont proposés par des fabricants de circuits intégrés et certains modèles peuvent être programmés par l'unité centrale pour l'exécution de tâches spécifiques. Cependant, certaines fonctions sont très spécifiques et ne peuvent être réalisées (ou du moins de façon peu efficaces) par des circuits vendus dans le commerce. Dans ce cas, et pour libérer davantage l'unité centrale à remplir ses fonctions, les constructeurs d'appareils ont recours à des circuits programmables. Ces circuits sont identifiés comme appartenant aux familles communément nommées par les acronymes : FPGA, EPLD, CPLD, selon la technologie utilisée. Ces circuits contiennent un ensemble de portes logiques. Leur programmation consiste à établir des liens électriques entre les portes afin de réaliser des fonctions logiques évoluées basées sur des ensembles de circuits combinatoires ou séquentiels. L'établissement des liens électriques peut se faire en détruisant des éléments fusibles si le circuit s'apparente à une PROM. D'autres technologies plus récentes permettent d'intégrer dans ces circuits des cellules EPROM effaçables par des ultraviolets, ou des cellules EEPROM inscriptibles et reprogrammables électriquement. Dans tous les cas, une fois programmé et installé sur l'appareil cible, le circuit est opérationnel et remplit les fonctions pour lesquelles il a été programmé.

Par exemple, si l'utilisateur désire utiliser un convertisseur numérique/analogique, alors le signal d'entrée doit être codé en numérique, par exemple, selon le format SDI (acronyme de « Serial Digital Interface »). Mais si l'utilisateur utilise son appareil en tant convertisseur Audio Analogique / Numérique, il doit appliquer des signaux analogiques par exemple, au format CVBS, en entrée.

Le document US 6 260 139 déposé par Xilink décrit un appareil doté d'un FPGA programmable. La sélection du code à introduire dans le FPGA s'effectue par un moyen de sélection, tel que des interrupteurs, un rotacteur ou une valeur introduite dans u registre à décalage. Les codes à télécharger pour la programmation du FPGA sont dans une ROM 14. Lorsqu'une différence dans les signaux de sélection est détectée, le FPGA lit dans une PROM externe le code correspondant à la nouvelle combinaison de signaux détectée. Ce document ne décrit pas la fonction du FPGA au sein de l'appareil.

Le document US 6 326 806 déposé par Xilink décrit un système pour configurer des circuits programmables. Un code à télécharger dans le FPGA par défaut est initialement chargé à la mise sous tension. Puis, un autre code à charger dans le FPGA peut être totalement ou partiellement transmis par un réseau. Le choix du code à télécharger s'effectue au niveau du réseau.

La présente invention décrit une méthodologie servant à la programmation dynamique d'un ou plusieurs circuits programmables.

La présente invention a pour objet un procédé de téléchargement d'un fichier de configuration dans un circuit programmable implémenté dans un appareil, ledit appareil comportant une pluralité de connecteurs destinés à transmettre des signaux de communication avec au moins un autre appareil, et un circuit programmable permettant de traiter lesdits signaux de communication reçus par lesdits connecteurs et de les transmettre à au moins un autre circuit (3) de l'appareil, caractérisé en ce qu'il comporte :
- une étape d'analyse des signaux de communication présents sur les connecteurs afin de détecter des connexions opérationnelles permettant la communication avec au moins un autre appareil,
- une étape de téléchargement d'au moins un fichier de configuration sélectionné parmi un ensemble de fichiers de configuration en fonction de la présence des connexions opérationnelles détectées, ledit fichier de configuration sélectionné correspondant aux connexions opérationnelles détectées.

De cette façon, le circuit programmable est configuré en fonction des connexions opérationnelles avec d'autres appareils.

Selon un premier perfectionnement, les connexions opérationnelles sont celles pour lesquelles l'appareil connecté délivre un niveau électrique déterminé. L'appareil détermine ainsi les appareils connectés fournissant ladite tension et susceptible d'entrer en communication.

Selon un autre perfectionnement, l'étape d'analyse intervient continuellement tant que l'appareil est sous tension. De cette façon, l'appareil analyse continuellement les connecteurs d'entrées et adapte le circuit programmable lorsqu'un changement intervient. Selon un perfectionnement, l'étape d'analyse continuellement opérationnelle consiste à analyser les informations envoyées par un autre appareil lors de sa connexion. De cette façon, l'appareil contenant le circuit programmable réagit très rapidement à un changement et adapte le circuit programmable en conséquence.

Selon un perfectionnement, au moins un fichier de configuration est sélectionné en fonction d'une configuration de plusieurs connexions opérationnelles. Ainsi, un même fichier de configuration peut répondre à la gestion de plusieurs connexions.

Selon un perfectionnement, les fonctions principales de l'appareil sont inactivées lors de l'étape de téléchargement. De cette façon, les signaux aléatoires émis par le composant programmable au cours de sa programmation ne déclenchent pas pour l'appareil un comportement intempestif. Selon une variante de réalisation, lors de l'étape de téléchargement, l'appareil émet un message indiquant une inactivation momentanée des fonctions. De cette façon, l'utilisateur est mis au courant d'une telle inactivation.

La présente invention a aussi pour objet un appareil de traitement comportant au moins une unité centrale caractérisé en ce qu'il comporte ; une pluralité de connecteurs destinés à transmettre des signaux de communication avec au moins un autre appareil, et un circuit programmable permettant de traiter au moins une partie des signaux de communication reçus par lesdits connecteurs et de les transmettre à au moins un autre circuit de l'appareil,

un moyen d'analyse desdits signaux de communication afin de détecter les connexions opérationnelles permettant la communication avec au moins un autre appareil, et un moyen de téléchargement d'au moins un fichier de configuration sélectionné parmi un ensemble de fichiers de configuration en fonction de la présence des connexions opérationnelles détectées, ledit fichier de configuration sélectionné correspondant aux connections opératiopnnelles détectées

D'autres caractéristiques et avantages de l'invention apparaîtront à travers la description d'un exemple de réalisation non limitatif de l'invention, explicité à l'aide des figures jointes, parmi lesquelles :
- la figure 1 est un diagramme bloc d'un récepteur, typiquement un lecteur audio selon un exemple de réalisation de l'invention,
- la figure 2 est un diagramme bloc de la partie interface permettant la connexion du récepteur à plusieurs appareils,
- la figure 3 représente un organigramme présentant les principales étapes d'un mode de réalisation simplifié d'un exemple de réalisation de la présente invention.

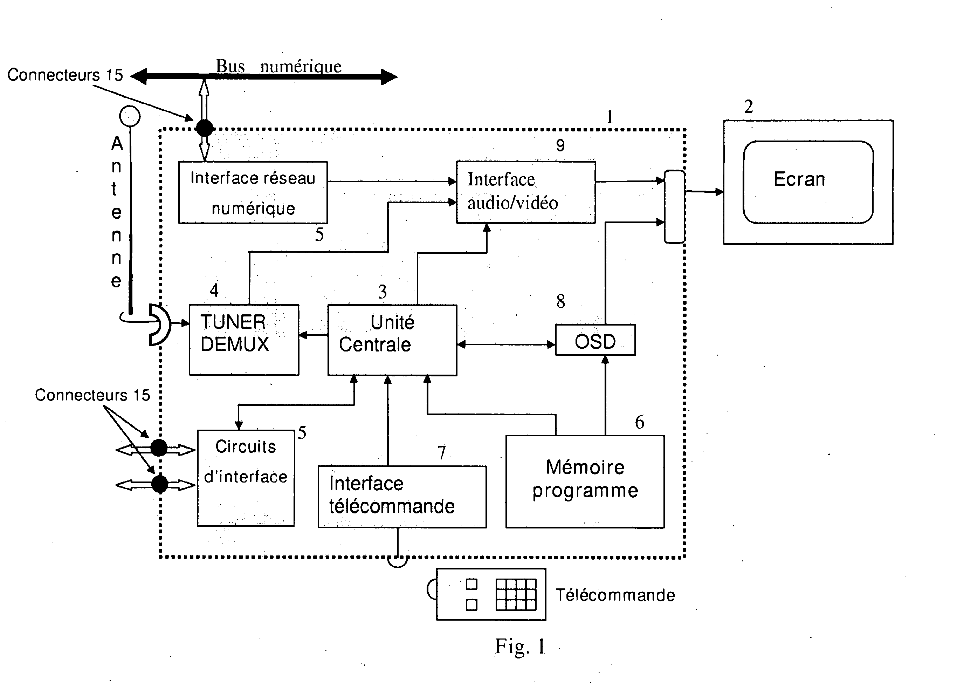

Selon un exemple préféré de réalisation, le circuit programmable est mis en oeuvre dans un récepteur tel que représenté à la figure 1, typiquement un récepteur 1 associé à un dispositif d'affichage 2. Le récepteur comprend une unité centrale 3 reliée à une mémoire de programme 6, un récepteur de signaux infrarouge 7 pour recevoir les signaux d'une télécommande, et une logique de décodage audio/vidéo 9 pour la génération des signaux audiovisuels envoyés à l'écran de télévision 2. Le récepteur 1 comprend également un circuit 8 d'affichage de données sur l'écran, appelé souvent circuit OSD, de l'anglais "On Screen Display" (signifiant littéralement "affichage sur l'écran"). Le circuit OSD 8 est un générateur de texte et de graphisme qui permet d'afficher à l'écran des menus, des pictogrammes ou autres graphismes. Le récepteur dispose d'un ensemble de connecteurs 15 permettant notamment de recevoir des données audio et/ou vidéo d'un réseau de diffusion à travers une antenne de réception associée à un démodulateur 4, ce réseau peut être de type radio, câble ou satellite. Les connecteurs 15 assurent également la communication avec un bus numérique local à haut débit permettant de recevoir des informations sur les contenus audio diffusés. Ce réseau est par exemple un réseau IEEE 1394. L'interface 5 permet de connecter d'autres appareils, par exemple des appareils dotés de connexions de type USB, CVBS (entrée vidéo composite) ou 4 :2 :2 (CCIR 656 - vidéo numérique), également à travers des connecteurs 15.

Les circuits d'interface 5 comportent un circuit programmable 10 qui assure certaines fonctions d'interfaçage entre l'unité centrale 3 et les connexions entrées/sorties.

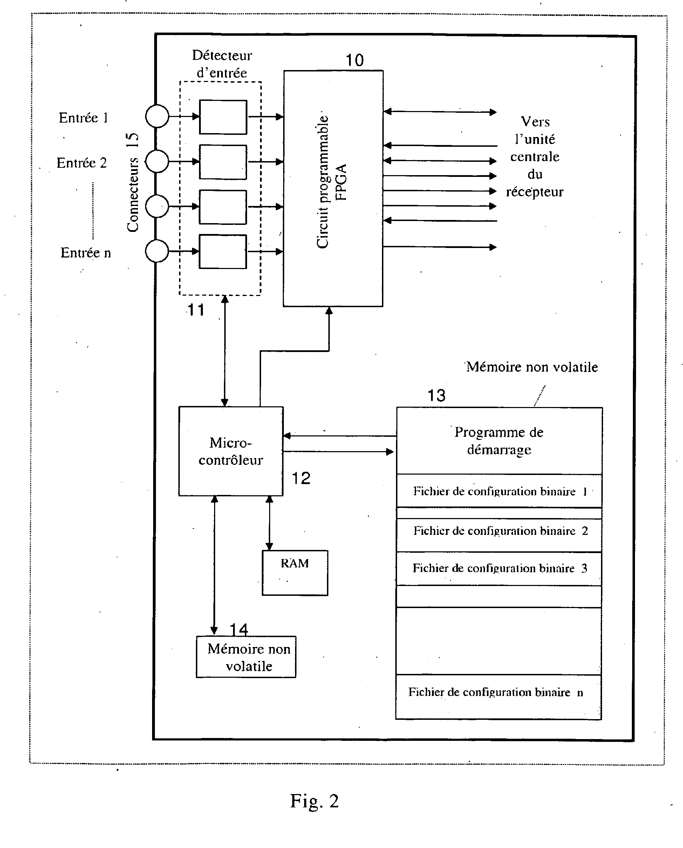

La figure 2 montre un diagramme bloc présentant les circuits d'interfaces 5 permettant la communication entre le récepteur 1 et d'autres appareils distants ou non. Ce diagramme montre notamment le circuit programmable 10 et les moyens matériels permettant d'assurer sa programmation. Le circuit programmable 10 reçoit les signaux d'entrées provenant d'un circuit 11. Le circuit 11 permet en plus de l'adaptation électrique, la détection des changements dans les signaux appliqués aux entrées de l'appareil 1. Le circuit 11 détecte notamment la connexion de nouveaux appareils délivrant un signal utile. Les appareils connectés peuvent également communiquer par une liaison sans contact de type radio (à l'aide d'une connexion WIFI par exemple), hyperfréquence, infrarouge ou tout autre moyen de communication sans fil. Dans ce cas, le circuit 11 contient les moyens de communication sans fil assurant une liaison l'entre l'appareil 1 et les appareils connectés.

Le circuit 11 est relié à un circuit de contrôle 12, typiquement un microcontrôleur, de cette façon ce dernier reçoit les informations sur l'utilisation des connexions d'entrées sorties. Le circuit de contrôle 12 est relié à une mémoire non volatile 13, qui est typiquement de la mémoire Flash, d'une capacité typique de 16 Méga octets et à une mémoire de travail RAM physiquement représentée sur le schéma comme extérieure au circuit de contrôle 12 mais pouvant parfaitement être intégrée à celui-ci. Le circuit 12 est également relié à une mémoire non volatile 14, typiquement un composant EEPROM communiquant avec un bus 12C ou une liaison série. La mémoire 14 contient la table de correspondance entre les différentes configurations de connexion supportées en entrée et les fichiers de configurations binaires à charger dans les circuits programmables. Le fait d'avoir un composant indépendant permet de simplifier industriellement ou en SAV la reprogrammation de cette mémoire non-volatile. Sa taille peut être limitée à quelques octets ou dizaines d'octets.

La mémoire 13 contient un programme principal destiné à contrôler l'ensemble des fonctions du produit , et un jeu de fichiers de configuration binaires (en anglais « Firmware 1, Firmware 2, Firmware 3,... ». Le format de ces fichiers est décrit par les notices des constructeurs de circuits programmables.

La configuration de chacun des circuits programmable autorise l'accès à des fonctions utilisant tout ou une partie des signaux transmis par les connecteurs 15.

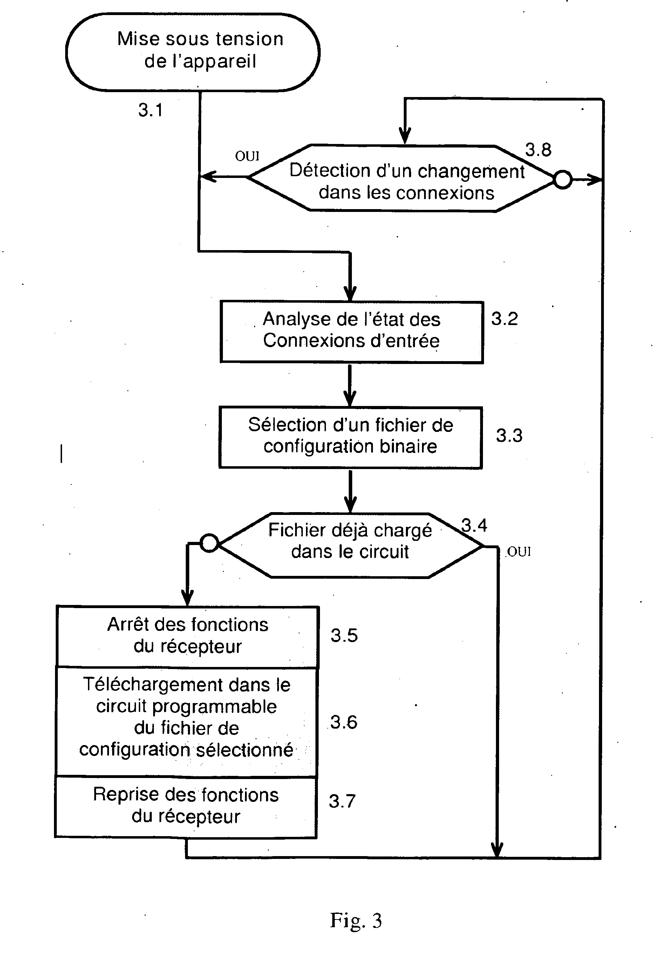

Après avoir détaillé les principaux composants d'un exemple de réalisation de l'invention, nous allons maintenant montrer à l'aide de l'organigramme de la figure 3 comment ceux-ci coopèrent.

Dans un premier temps, l'utilisateur installe les différents appareils et les connecte entre eux. L'analyse des connections est faite à la mise sous tension (étape 3.1). Cette étape permet de détecter les nouvelles connections faites lorsque le récepteur 1 était hors tension. A l'étape 3.2 le circuit de détection 11 analyse l'état des connecteurs d'entrée 15 afin de déterminer quelles sont les connexions opérationnelles. On entend par connexion opérationnelle la présence détectée d'un signal utile au format valide. Suite à cette analyse, le microcontrôleur 12 sélectionne le fichier de configuration binaire correspondant aux appareils connectés au récepteur (étape 3.3). Selon un perfectionnement, le fichier de configuration binaire est référencé par un mot de données contenant une pluralité d'indicateurs binaires, chacun associé à une entrée. La taille en bits du mot est égale au nombre d'entrées disponibles sur l'appareil. Le microcontrôleur 12 lit successivement chaque mot de données associé à un fichier. Si, pour un mot donné, l'indicateur binaire de l'entrée connectée à un appareil opérationnel est à « 1 », alors le microcontrôleur sélectionne le fichier de configuration associé à ce mot.

A l'étape 3.4, le microcontrôleur détermine si le ou les fichiers de configuration binaire sont déjà chargés dans le composant programmable 10. Cette étape est optionnelle, on peut aussi systématiquement charger une configuration lors de chaque changement. Si au moins un fichier n'est pas chargé alors le programme passe à l'étape 3.5. Sinon, il est inutile de modifier la configuration présente au sein du circuit 10 et le programme passe directement à l'étape 3.8 d'attente de changement dans les connexions. A l'étape 3.5, le microcontrôleur inhibe le fonctionnement du récepteur de façon à éviter tout signal aléatoire émis par le composant 10 au cours de sa programmation. Une autre solution consiste en ce que le microcontrôleur 12 prévienne l'unité centrale 3 du récepteur d'un chargement d'un nouveau fichier de configuration binaire. L'unité centrale prévient alors l'utilisateur de l'indisponibilité de l'appareil, en affichant un message sur fond d'un écran de couleur uniforme. A l'étape 3 .6, le ou les fichiers de configuration sélectionnés à l'étape 3.2 sont téléchargés de la mémoire 13 dans le composant 10. Le téléchargement s'effectue conformément aux spécifications du constructeur du circuit programmable et n'a pas besoin d'être explicité d'avantage. Si la configuration de signaux valides détectés en entrée n'a pas de sens au regard de la définition du produit, la configuration du circuit programmable 10 demeure inchangée jusqu'à ce qu'une configuration valide soit détectée ou que l'on reconnecte les entrées dans la dernière configuration établie.

Une fois cette opération terminée, le microcontrôleur 12 autorise le bon fonctionnement du récepteur (étape 3.7). Les signaux reçus sont alors pris en compte par le circuit programmable doté du fichier de configuration adapté. A l'étape 3.8, le microcontrôleur 12 continue l'exécution d'une boucle d'attente de détection d'un changement dans les connexions. Pour éviter de consommer du courant inutilement, le circuit 11 détecte des changements dans les connexions et active par une interruption le microcontrôleur 12, ce dernier étant désactivé en temps normal.

Ainsi, un appareil peut avoir un grand nombre de fonctions de traitement disponibles sur un produit qui possède une base matérielle et logicielle commune et un nombre fini de circuits programmables. L'avantage est une réduction notable du coût de développement et du coût matière global pour une 'famille de produits', et un produit qui peut s'adapter rapidement à une nouvelle configuration selon son mode de connexion.

Il existe plusieurs façons de détecter l'apparition et la disparition de connexions. Voici une première façon : en réponse à une requête ou sous la forme d'interruptions, le circuit de détection 11 émet des informations vers le circuit de contrôle 12 pour l'informer de l'existence et de la nature de connections électriques avec des appareils extérieurs en ordre de marche. La présence d'un appareil en ordre de marche est détectée par exemple à l'aide d'une tension sur une broche au moins d'un connecteur 15. En fonction de cette information, le circuit de contrôle sélectionne un ou plusieurs fichiers de configuration binaires, à l'étape 3.3. Typiquement, on trouve dans la mémoire 13 autant de jeux de données d'interface qu'il existe de connecteurs 15 sur l'appareils. Le jeu sélectionné est ensuite chargé dans le composant programmable 10.

Une autre façon de détecter une connexion consiste à disposer d'un contact mécanique sur un connecteur 15, ce contact est en position fermé lorsque la broche de connexion est introduite dans le connecteur du récepteur 1. Un signal électrique portant une information binaire : « 0 » si la broche est présente, « 1 » si la broche est absente, est transmis au circuit de contrôle 12. Le microcontrôleur 12 analyse l'état des signaux associés à chaque connecteur 15 et en déduit les connexions présentes, puis il utilise les signaux pour adresser la mémoire à rechercher le fichier de configurations binaires pour le traitement des signaux reçus sur les connecteurs d'entrée 15.

Selon un perfectionnement, la table contient des indicateurs de priorité permettant de définir une hiérarchie lorsque plusieurs appareils sont connectés. Cette hiérarchie consiste à affecter une valeur de priorité à chaque entrée, l'entrée la plus prioritaire a la valeur 1

Selon une variante, lorsque plusieurs connexions sont détectées, le microcontrôleur charge autant de fichiers de configurations binaires qu'il y a de connexions opérationnelles.

Le récepteur 1 peut disposer de plusieurs circuits programmables 10 dont la programmation dépend des signaux présents sur les connecteurs d'entrée 15. Dans ce cas, le microcontrôleur 12 contrôle le chargement des fichiers de configurations binaires pour l'ensemble des circuits programmables.

Selon un perfectionnement, l'appareil connecté émet un bloc d'information contenant un identifiant de l'appareil. Ce bloc est utilisé par la fonction « Plug and Play » pour configurer les appareils automatiquement lors de la connexion. Les appareils connectés échangent leurs informations ce qui permet de configurer la communication et d'afficher sur l'appareil doté d'un moyen d'affichage, un identifiant de l'appareil connecté. Un exemple bien connu consiste à raccorder une clef USB à un ordinateur, l'écran de l'ordinateur affiche les caractéristiques de la connexion. Selon un autre exemple, l'utilisateur raccorde à un connecteur 15 un cordon transmettant un flux vidéo SDI (« Serial Digital Interface »), le circuit de détection 11 détecte les informations reçues, en déduit la nature du signal et la transmet au microcontrôleur 12. Le récepteur 1 selon la présente invention reçoit les informations émises lors de la connexion et utilise l'identificateur de l'appareil ou son type pour sélectionner le fichier de configuration binaire.

## Revendications

1. Procédé de téléchargement d'un fichier de configuration dans un circuit programmable (10) implémenté dans un appareil (1), ledit appareil comportant une pluralité de connecteurs (15) destinés à transmettre des signaux de communication avec au moins un autre appareil, et un circuit programmable (10) permettant de traiter lesdits signaux de communication reçus par lesdits connecteurs (15) et de les transmettre à au moins un autre circuit (3) de l'appareil, **caractérisé en ce qu'**il comporte :
- une étape d'analyse (3.2) des signaux de communication présents sur les connecteurs (15) afin de détecter des connexions opérationnelles permettant la communication avec au moins un autre appareil,
- une étape de téléchargement (3.6) d'au moins un fichier de configuration sélectionné parmi un ensemble de fichiers de configuration en fonction de la présence des connexions opérationnelles détectées, ledit fichier de configuration sélectionné correspondant aux connexions operationnelles détectées

2. Procédé de téléchargement selon la revendication 1 **caractérisé en ce que** les connexions opérationnelles sont celles pour lesquelles l'appareil connecté délivre un niveau électrique déterminé.

3. Procédé de téléchargement selon la revendication 1 ou 2 **caractérisé en ce que** l'étape d'analyse intervient continuellement tant que l'appareil (1) est sous tension.

4. Procédé de téléchargement selon la revendication 3 **caractérisé en ce que** l'étape d'analyse continuellement opérationnelle consiste à analyser les informations envoyées par l'autre appareil lors de sa connexion.

5. Procédé de téléchargement selon l'une quelconque des revendications précédentes **caractérisé en ce que** au moins un fichier de configuration est sélectionné en fonction d'une configuration de plusieurs connexions opérationnelles.

6. Procédé de téléchargement selon l'une quelconque des revendications précédentes **caractérisé en ce que** les fonctions principales de l'appareil (1) sont inactivées lors de l'étape de téléchargement.

7. Procédé de téléchargement selon l'une quelconque des revendications 1 à 5 **caractérisé en ce que** l'appareil (1) émet un message indiquant une inactivation momentanée des fonctions lors de l'étape de téléchargement.

8. Appareil de traitement (1) comportant au moins une unité centrale (3), **caractérisé en ce qu'**il comporte une pluralité de connecteurs (15) destinés à transmettre des signaux de communication avec au moins un autre appareil, et un circuit programmable (10) permettant de traiter au moins une partie des signaux de communication reçus par lesdits connecteurs et de les transmettre à au moins un autre circuit (3) de l'appareil,
un moyen d'analyse (11) desdits signaux de communication afin de détecter les connexions opérationnelles permettant la communication avec au moins un autre appareil, et un moyen de téléchargement (12,13) d'au moins un fichier de configuration sélectionné parmi un ensemble de fichiers de configuration en fonction de la présence des connexions opérationnelles détectés, ledit fichier de configuration sélectionné correspondant aux connexions opérationnelles détectées.

9. Appareil de traitement (1) de signaux de communication selon la revendication 8 **caractérisé en ce que** le moyen d'analyse (11) détermine les connexions opérationnelles comme celles délivrant un niveau électrique déterminé.

10. Appareil de traitement (1) de signaux de communication selon la revendication 8 ou 9 **caractérisé en ce que** le moyen d'analyse (11) analyse continuellement les informations envoyées par l'autre appareil dans les signaux communiqués et en déduit les connexions opérationnelles.

11. Appareil de traitement (1) de signaux de communication selon l'une quelconque des revendications 8 à 10 % **caractérisé en ce que** le moyen d'analyse (11) analyse tous les signaux de communication issus des connecteurs afin de sélectionner le fichier de configuration.

12. Appareil de traitement (1) de signaux de communication selon l'une quelconque des revendications 8 à 11 % **caractérisé en ce qu'**il comporte un moyen d'émission (6, 8, 9) d'un message indiquant une inactivation momentanée des fonctions lors de l'étape de téléchargement.

## Claims

1. Method of downloading a configuration file to a programmable circuit (10) implemented in a device (i), said device comprising a plurality of connectors (15) for the transmission of communication signals with at least one other device, and a programmable circuit enabling said communication signals received from said connectors to be processed and transmission of them to at least one other circuit of the device, wherein it comprises the steps of:
analyzing (3.2) communication signals present on the connectors (15) in order to detect operational connections enabling communication with at least one other device,
downloading (3.6) at least one configuration file selected from among a set of configuration files according to the presence of the detected operational connections, said selected configuration file corresponding to the detected operational connections.

2. Downloading method according to claim 1, **characterized in that** the operational connections are those for which the connected device delivers a determined electrical level.

3. Downloading method according to claim 1 or claim 2, **characterized in that** the analysis step intervenes continuously while the device (i) is on.

4. Downloading method according to claim 3, **characterized in that** the continuously operational analysis step consists in analyzing the information sent by the other device during its connection.

5. Downloading method according to any one of the preceding claims, **characterized in that** at least one configuration file is selected according to a configuration of several operational connections.

6. Downloading method according to claim 1, **characterized in that** the principle functions of the device (1) are disabled during the downloading.

7. Downloading method according to claim 1, **characterized in that** the device sends a message indicating a momentary disabling of the functions during the downloading.

8. Processing device (1) comprising of at least one central processing unit (3), **characterized in that** it comprises:
a plurality of connectors (15) to transmit communication signals with at least one other device, and a programmable circuit enabling processing of at least one part of the communication signals received by said connectors and of transmitting them to at least one other circuit (3) of the device;
means of analysis (11) of said communication signals in order to detect operational connections enabling communication with at least one other device, and a means of downloading (12,13) at least one configuration file selected from among a set of configuration files according to the presence of the detected operational connections, said selected configuration file corresponding to the detected operational connections.

9. Processing device (1) of communication signals according to claim 8, **characterized in that** the analysis means (ii) determine the operational connections like the connections supplying a determined electrical level.

10. Processing device (1) of communication signals according to claim 8 or claim 9, **characterized in that** the means of analysis (ii) continuously analyzes information sent by the other device in the communication signals and deduces the operational connections from said information.

11. Processing device (1) of communication signals according to any one of claims 8 to 10, **characterized in that** the analysis means (ii) analyzes all the communication signals from the connectors in order to select the configuration file.

12. Processing device (1) of communication signals according to any one of claims 8 to 11, **characterized in that** it comprises a means of transmission (6,8,9) of a message indicating a temporary deactivation of functions during the downloading.

## Patentansprüche

1. Verfahren zum Herunterladen einer Konfigurationsdatei in eine programmierbare Schaltung (10), die in einem Gerät (1) implementiert ist, wobei das Gerät eine Vielzahl von Steckverbindern (15), die dazu bestimmt sind, Signale zur Kommunikation mit mindestens einem weiteren Gerät zu übertragen, und eine programmierbare Schaltung (10) aufweist, die es ermöglicht, die von den Steckverbindern (15) empfangenen Kommunikationssignale zu verarbeiten und sie an mindestens eine weitere Schaltung (3) des Geräts zu übertragen, **dadurch gekennzeichnet, dass** es folgende Schritte umfasst:
- einen Schritt der Analyse (3.2) der an den Steckverbindern (15) vorhandenen Kommunikationssignale, um operative Verbindungen zu ermitteln, welche die Kommunikation mit mindestens einem weiteren Gerät ermöglichen;
- einen Schritt des Herunterladens (3.6) mindestens einer Konfigurationsdatei, die aus einer Gesamtheit von Konfigurationsdateien in Abhängigkeit von dem Vorhandensein der ermittelten operativen Verbindungen ausgewählt wird, wobei die ausgewählte Konfigurationsdatei den ermittelten operativen Verbindungen entspricht.

2. Verfahren zum Herunterladen nach Anspruch 1, **dadurch gekennzeichnet, dass** die operativen Verbindungen diejenigen sind, für die das angeschlossene Gerät einen bestimmten elektrischen Pegel ausgibt.

3. Verfahren zum Herunterladen nach Anspruch 1 oder 2,
**dadurch gekennzeichnet, dass** der Schritt der Analyse kontinuierlich erfolgt, solange das Gerät (1) unter Spannung steht.

4. Verfahren zum Herunterladen nach Anspruch 3, **dadurch gekennzeichnet, dass** der kontinuierlich operative Schritt der Analyse darin besteht, die Informationen zu analysieren, die von dem anderen Gerät beim Anschließen desselben gesendet werden.

5. Verfahren zum Herunterladen nach einem der vorhergehenden Ansprüche, **dadurch gekennzeichnet, dass** mindestens eine Konfigurationsdatei in Abhängigkeit von einer Konfiguration mehrerer operativer Verbindungen ausgewählt wird.

6. Verfahren zum Herunterladen nach einem der vorhergehenden Ansprüche, **dadurch gekennzeichnet, dass** die Hauptfunktionen des Geräts (1) bei dem Schritt des Herunterladens inaktiviert werden.

7. Verfahren zum Herunterladen nach einem der Ansprüche 1 bis 5, **dadurch gekennzeichnet, dass** das Gerät (1) eine Nachricht sendet, die eine vorübergehende Inaktivierung der Funktionen bei dem Schritt des Herunterladens anzeigt.

8. Verarbeitungsgerät (1) mit mindestens einer Zentraleinheit (3), **dadurch gekennzeichnet, dass** es eine Vielzahl von Steckverbindern (15), die dazu bestimmt sind, Signale zur Kommunikation mit mindestens einem weitern Gerät zu übertragen, und eine programmierbare Schaltung (10), die es ermöglicht, mindestens einen Teil der von den Steckverbindern empfangenen Kommunikationssignale zu verarbeiten und sie an mindestens eine weitere Schaltung (3) des Geräts zu übertragen, ein Mittel (11) für die Analyse der Kommunikationssignale, um die operativen Verbindungen zu ermitteln, welche die Kommunikation mit mindestens einem anderen Gerät ermöglichen, und ein Mittel (12, 13) zum Herunterladen mindestens einer Konfigurationsdatei, die aus einer Gesamtheit von Konfigurationsdateien in Abhängigkeit von dem Vorhandensein der ermittelten operativen Verbindungen ausgewählt wird, aufweist, wobei die ausgewählte Konfigurationsdatei den ermittelten operativen Verbindungen entspricht.

9. Gerät (1) zur Verarbeitung von Kommunikationssignalen nach Anspruch 8, **dadurch gekennzeichnet, dass** das Analysemittel (11) die operativen Verbindungen als diejenigen festliegt, die einen bestimmten elektrischen Pegel ausgeben.

10. Gerät (1) zur Verarbeitung von Kommunikationssignalen nach Anspruch 8 oder 9, **dadurch gekennzeichnet, dass** das Analysemittel (11) die von dem anderen Gerät gesendeten Informationen in den kommunizieten Signalen kontinuierlich analysiert und daraus die operativen Verbindungen ableitet.

11. Gerät (1) zur Verarbeitung von Kommunikationssignalen nach einem der Ansprüche 8 bis 10, **dadurch gekennzeichnet**, das das Analysemittel (11) alle aus den Steckverbindern stammenden Kommunikationssignale analysiert, um die Konfigurationsdatei auszuwählen.

12. Gerät (1) zur Verarbeitung von Kommunikationssignalen nach einem der Ansprüche 8 bis 11, **dadurch gekennzeichnet, dass** es ein Mittel (6, 8, 9) zum Senden einer Nachricht aufweist, welche eine vorübergehende Inaktivierung der Funktionen bei dem Schritt des Herunterladens anzeigt.
